(19) **Europäisches Patentamt / European Patent Office / Office européen des brevets**

(11) **EP 2 638 632 B1**

(12) **FASCICULE DE BREVET EUROPEEN**

(45) Date de publication et mention de la délivrance du brevet:
**15.07.2015 Bulletin 2015/29**

(21) Numéro de dépôt: **11799755.1**

(22) Date de dépôt: **07.11.2011**

(51) Int Cl.:
***H02P 9/46*** *(2006.01)*

(86) Numéro de dépôt international:
**PCT/FR2011/052585**

(87) Numéro de publication internationale:
**WO 2012/062989 (18.05.2012 Gazette 2012/20)**

(54) **CIRCUIT D'ALIMENTATION POUR UN AERONEF INCLUANT UNE MACHINE ASYNCHRONE**

STROMVERSORGUNGSSCHALTUNG FÜR EIN FLUGZEUG MIT EINER ASYNCHRONMASCHINE

POWER SUPPLY CIRCUIT FOR AN AIRCRAFT INCLUDING AN ASYNCHRONOUS MACHINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.11.2010 FR 1059269**

(43) Date de publication de la demande:
**18.09.2013 Bulletin 2013/38**

(73) Titulaire: **Hispano Suiza**
**92700 Colombes (FR)**

(72) Inventeur: **DE WERGIFOSSE, Eric**
**F-77515 Saint Augustin (FR)**

(74) Mandataire: **David, Alain et al**
**Cabinet Beau de Loménie**
**158, rue de l'Université**
**75340 Paris Cedex 07 (FR)**

(56) Documents cités:
**FR-A1- 2 870 401     US-A- 5 194 757**

- **AL-SAFFAR M A ET AL: "Controlled shunt capacitor self-excited induction generator", INDUSTRY APPLICATIONS CONFERENCE, 1998. THIRTY-THIRD IAS ANNUAL MEETING. THE 1998 IEEE ST. LOUIS, MO, USA 12-15 OCT. 1998, NEW YORK, NY, USA, IEEE, US, vol. 2, 12 octobre 1998 (1998-10-12), pages 1486-1490, XP010313004, DOI: DOI:10.1109/IAS.1998.730338 ISBN: 978-0-7803-4943-8**
- **AHMED T ET AL: "Three-phase self-excited induction generator driven by variable-speed prime mover for clean renewable energy utilizations and its terminal voltage regulation characteristics by static VAr compensator", CONFERENCE RECORD OF THE 2003 IEEE INDUSTRY APPLICATIONS CONFERENCE. 38TH. IAS ANNUAL MEETING. SALT LAKE CITY, UT, OCT. 12 - 16, 2003; [CONFERENCE RECORD OF THE IEEE INDUSTRY APPLICATIONS CONFERENCE. IAS ANNUAL MEETING], NEW YORK, NY : IEEE, US, vol. 2, 12 octobre 2003 (2003-10-12), pages 693-700, XP010676093, DOI: DOI:10.1109/IAS.2003.1257593 ISBN: 978-0-7803-7883-4**

**Description**

Arrière-plan de l'invention

L'invention concerne l'alimentation en énergie électrique des équipements électriques d'un moteur d'aéronef.

Il est connu d'utiliser un générateur électrique intégré au moteur d'un aéronef pour produire de l'énergie électrique afin d'alimenter des équipements électriques associés au moteur. Par exemple, le document FR 2 911 848 décrit un générateur d'alimentation relié à un circuit de dégivrage d'un moteur d'aéronef.

Le générateur d'alimentation utilisé dans ce type d'application est typiquement un générateur synchrone à deux ou trois étages. Un tel générateur synchrone permet de fournir une tension alternative bien régulée avec un bon facteur de forme. Il est ainsi possible de fournir une tension alternative d'amplitude sensiblement constante, même lorsque la vitesse de rotation du moteur qui entraine le générateur d'alimentation varie. Cependant, la complexité d'un tel générateur synchrone multi-étage implique généralement un encombrement important, une fiabilité réduite et un coût élevé. Il est également difficile d'introduire une redondance lorsque les exigences de fiabilité l'imposent.

Il est également connu, notamment dans le domaine technique de la production d'énergie électrique par éoliennes, qu'une machine asynchrone peut fonctionner en générateur asynchrone auto-excité. Une machine asynchrone comprend typiquement un rotor comprenant un circuit électrique fermé (rotor à cage d'écureuil ou enroulements reliés en circuit fermé) et un stator comprenant au moins un enroulement pouvant être relié à une charge. Pour permettre un fonctionnement en générateur asynchrone auto-excité, un banc capacitif destiné à fournir de la puissance réactive est relié à la machine asynchrone. Lorsque le rotor est entraîné en rotation, et si la valeur de la capacité du banc capacitif est choisie de manière appropriée en fonction de la charge et de la vitesse de rotation, une telle machine asynchrone peut fonctionner en générateur et fournir de l'énergie électrique à la charge reliée au stator.

Des générateurs asynchrones auto-excitées sont connus des documents US5194757, FR2870401 , « Controlled shunt capacitor self-excited induction generator » et « Three-phase self-excited induction generator driven by variable-speed prime mover for clean renewable energy utilizations and its terminal voltage regulation characteristics by static VAR compensator ».

Objet et résumé de l'invention

L'invention vise à fournir un circuit d'alimentation pour un moteur d'aéronef, qui ne présente pas au moins certains des inconvénients de l'art antérieur précité.

A cet effet, l'invention propose un circuit d'alimentation en énergie électrique pour un aéronef, comprenant un générateur d'alimentation destiné à être entrainé en rotation par le moteur de l'aéronef pour alimenter un équipement électrique du moteur de l'aéronef, caractérisé en ce que le générateur d'alimentation comprend une machine asynchrone reliée à un dispositif d'excitation,

la machine asynchrone incluant un rotor apte à être entrainé en rotation par le moteur et un stator relié audit équipement électrique,

le dispositif d'excitation étant apte à faire circuler un courant réactif dans ledit stator.

L'invention permet donc d'utiliser une machine asynchrone pour alimenter un équipement électrique d'un moteur d'aéronef, ce qui présente plusieurs avantages. Notamment, une machine asynchrone est une machine robuste, fiable et peu coûteuse. De plus, lors de la conception d'une machine asynchrone, on dispose d'un grand degré de liberté sur le facteur de forme, ce qui facilite son intégration dans le moteur d'un aéronef. Par ailleurs, le dispositif d'excitation doit être dimensionné uniquement pour le courant de magnétisation de la machine asynchrone, plus faible que le courant d'alimentation de l'équipement électrique. Le dispositif d'excitation peut donc être conçu de manière particulièrement simple et dimensionné de manière limitée, ce qui permet de limiter la taille et le coût du dispositif d'excitation.

Le dispositif d'excitation peut comprendre un ou plusieurs condensateurs.

Dans ce cas, le dispositif d'excitation peut présenter une structure particulièrement simple, ce qui contribue à limiter sa taille et son coût.

Dans un mode de réalisation, la machine asynchrone présente une inductance de magnétisation Lm pouvant être exprimée par une loi :

$$L_m = L_0 \frac{I_{\mu 2}{}^{\alpha}}{I_{\mu 2}{}^{\alpha} + I_m{}^{\alpha}}$$

où $L_0$ est l'inductance de magnétisation à courant nul, $I_{\mu 2}$ est le courant de magnétisation qui fait décroître l'inductance de magnétisation $L_m$ d'un facteur 2, $I_m$ est le courant de magnétisation, et $\alpha$ est un coefficient qui dépend des caractéristiques de la machine asynchrone, dans lequel $\alpha$ est un inférieur à 2,5.

Un tel coefficient proche de 2 permet de limiter la variation d'amplitude de la tension électrique générée par la machine asynchrone, même lorsque la vitesse de rotation du moteur varie dans un rapport de 1 à 2. Il est donc possible d'alimenter un équipement électrique qui nécessite une tension d'amplitude sensiblement constante.

Dans une mode de réalisation, le circuit d'alimentation comprend une unité électronique de commande apte à commander le courant réactif fournit par le dispositif d'excitation.

Grâce à ces caractéristiques, il est possible d'alimenter un équipement électrique qui nécessite une tension d'amplitude sensiblement constante.

Par exemple, le dispositif d'excitation peut comprendre une cellule à capacité variable, l'unité électronique de commande étant apte à commander la capacité de la cellule à capacité variable.

Dans ce cas, la cellule à capacité variable peut comprendre un module apte à commander l'ouverture et la fermeture d'un commutateur selon un rapport cyclique déterminé en fonction d'une consigne de capacité.

Selon un autre exemple, le dispositif d'excitation comprend un dispositif électronique apte à fournir un courant réactif commandé par l'unité électronique de commande.

Dans ce cas, le dispositif électronique peut être un onduleur.

Selon un mode de réalisation, le circuit d'alimentation comprend un deuxième dispositif d'excitation relié à la machine asynchrone.

Une telle redondance permet d'améliorer la fiabilité du circuit d'alimentation. De plus, comme le dispositif d'excitation peut être conçu de manière particulièrement simple et dimensionné de manière limitée, cette redondance n'introduit par un encombrement et un coût importants.

L'invention propose aussi un moteur d'aéronef comprenant un circuit d'alimentation conforme à l'invention.

Brève description des dessins

L'invention sera mieux comprise à la lecture de la description faite ci-après, à titre indicatif mais non limitatif, en référence aux dessins annexés, sur lequel :

- la figure 1 est un schéma d'un circuit d'alimentation selon un mode de réalisation de l'invention, dans son environnement,
- la figure 2 représente de manière plus détaillée le circuit d'alimentation de la figure 1,
- les figures 3 et 4 sont des graphes représentant la tension de phase d'un circuit d'alimentation du type de la figure 2, en fonction d'une vitesse de rotation,
- les figures 5, 7 et 8 sont des figures similaires à la figure 2, représentant d'autres modes de réalisation de l'invention, et
- la figure 6 est un graphe représentant la tension de phase d'un circuit d'alimentation de la figure 6, en fonction d'une vitesse de rotation.

Description détaillée de modes de réalisation

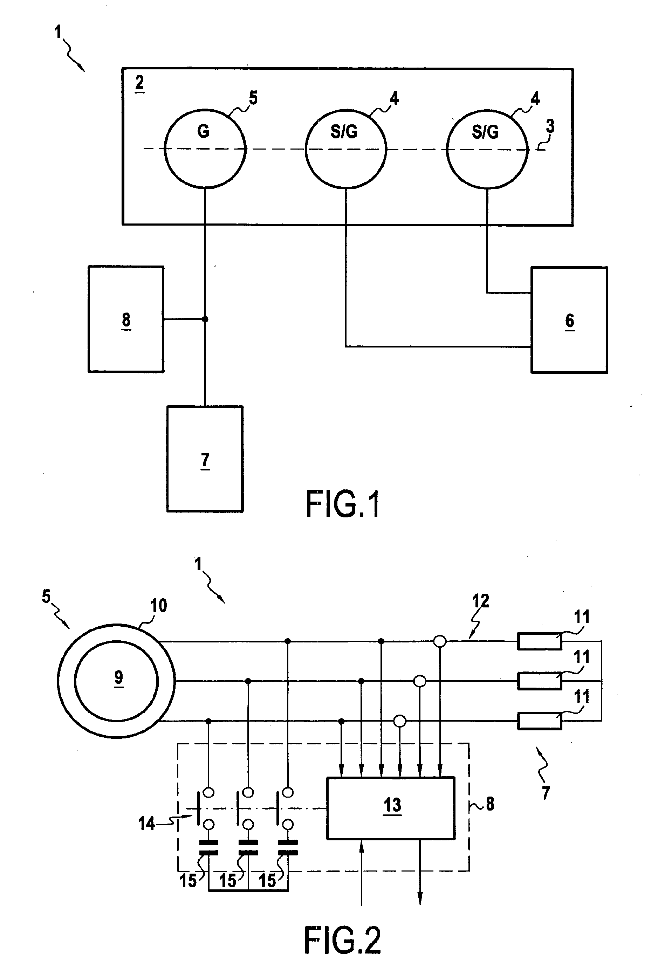

La **figure 1** représente un circuit d'alimentation 1 selon un mode de réalisation de l'invention, dans son environnement. Le circuit d'alimentation 1 est destiné à alimenter un équipement électrique 7 d'un moteur 2 d'aéronef. Le moteur 2 est par exemple un turboréacteur.

L'équipement électrique 7 est de type principalement résistif. Par exemple, dans la suite de la description, on considère que l'équipement électrique 7 est un circuit de dégivrage du moteur 2, comprenant des résistances de dégivrage intégrées aux bords d'entrée du moteur 2.

Le circuit d'alimentation 1 comprend un générateur d'alimentation 5, l'équipement électrique 7 ainsi qu'un dispositif d'excitation 8. Le générateur d'alimentation 5 peut être entrainé en rotation par un arbre 3 du moteur 2. L'arbre 3 est également relié à des démarreurs-générateurs 4 (S/G pour « *Starter-Generator»*) pouvant fonctionner en moteur électrique synchrone lors du démarrage du moteur 2 et en générateur synchrone lors du fonctionnement du moteur 2, par exemple pour alimenter en énergie électrique le réseau de bord 6 de l'aéronef.

Le générateur d'alimentation 5 est une machine asynchrone. Ainsi, ci-après, on utilisera la même référence 5 pour désigner la machine asynchrone.

La **figure 2** représente le circuit d'alimentation 1 de manière plus détaillée. La machine asynchrone 5 comprenant un rotor 9 relié à l'arbre 3 et un stator 10 relié par un circuit électrique 12 aux résistances de dégivrage 11 de l'équipement électrique 7. Le rotor 9 est par exemple un rotor à cage d'écureuil. Dans l'exemple représenté, le stator 10, le circuit électrique 12 et les résistances de dégivrage 11 forment un système triphasé. En variante, ils peuvent former un système polyphasé.

Le dispositif d'excitation 8 comprend une unité électronique de commande 13, des commutateurs 14 et des condensateurs 15.

L'unité électronique de commande 13 présente l'architecture matérielle d'un ordinateur. Elle comprend notamment un processeur, une mémoire morte, une mémoire vive et une interface. Le processeur permet d'exécuter des programmes d'ordinateur mémorisés dans la mémoire morte, en utilisant la mémoire vive. L'interface permet de recevoir des signaux de mesure et des messages d'instruction ainsi que d'émettre des signaux de commande et des messages de rapport.

Ainsi, l'unité électronique de commande 13 reçoit des signaux de mesure représentatifs des tensions et des courants dans le circuit électrique 12. Par ailleurs, l'unité électronique de commande 13 peut commander l'ouverture ou la fermeture des commutateurs 14. De plus, l'unité électronique de commande 13 peut recevoir, par exemple depuis le calculateur principal du moteur 2, un message d'instruction de mise en fonction du dégivrage et envoyer vers le calculateur principal un message de rapport sur le statut et l'état de santé de la fonction de dégivrage.

Lorsque les commutateurs 14 sont dans leur état fermé, les condensateurs 15 sont reliés au circuit électrique 12 et lorsque les commutateurs 14 sont dans leur état ouvert, les condensateurs 15 ne sont pas reliés au circuit électrique 12.

Le fonctionnement du circuit d'alimentation 1 est le suivant.

Lorsque les commutateurs 14 sont ouverts, aucun courant réactif n'est fourni au stator 10. Aucun champ magnétique n'est généré dans la machine asynchrone 5. Ainsi, aucune tension électrique n'est générée et les résistances de dégivrage 11 ne sont pas alimentées.

Lorsque les commutateurs 14 sont fermés, ils fournissent un courant réactif au stator 10. Un champ magnétique est donc généré dans la machine asynchrone 5. Si la vitesse de rotation N de l'arbre 3 du moteur 2 se trouve dans les bonnes conditions par rapport aux valeurs des condensateurs 15 et des résistances de dégivrage 11, la machine asynchrone 5 peut fonctionner comme générateur asynchrone auto-excité, et donc générer une tension électrique au stator 10 permettant d'alimenter les résistances de dégivrage 11.

Lors de la fermeture des commutateurs 14, un phénomène d'autoamorçage est initié par le flux rémanent de la machine asynchrone 5. Dans un mode de réalisation, un dispositif d'aide à l'amorçage (non représenté) est relié au circuit électrique 12. Lors de la fermeture des commutateurs 14, le dispositif d'aide à l'amorçage envoie une impulsion de courant dans le circuit électrique 12, par exemple par l'intermédiaire d'un transformateur, afin de générer un champ magnétique rémanent permettant l'amorçage.

Pour permettre le fonctionnement en générateur asynchrone auto-excité, la valeur de la capacité des condensateurs 15 doit être choisie de manière appropriée, en fonction notamment des caractéristiques de la machine asynchrone 5, de la plage de vitesse de rotation N de l'arbre 3 et des résistances de dégivrage 11. La détermination de la valeur appropriée de la capacité est connue de l'homme du métier et il n'est pas nécessaire de la décrire en détail.

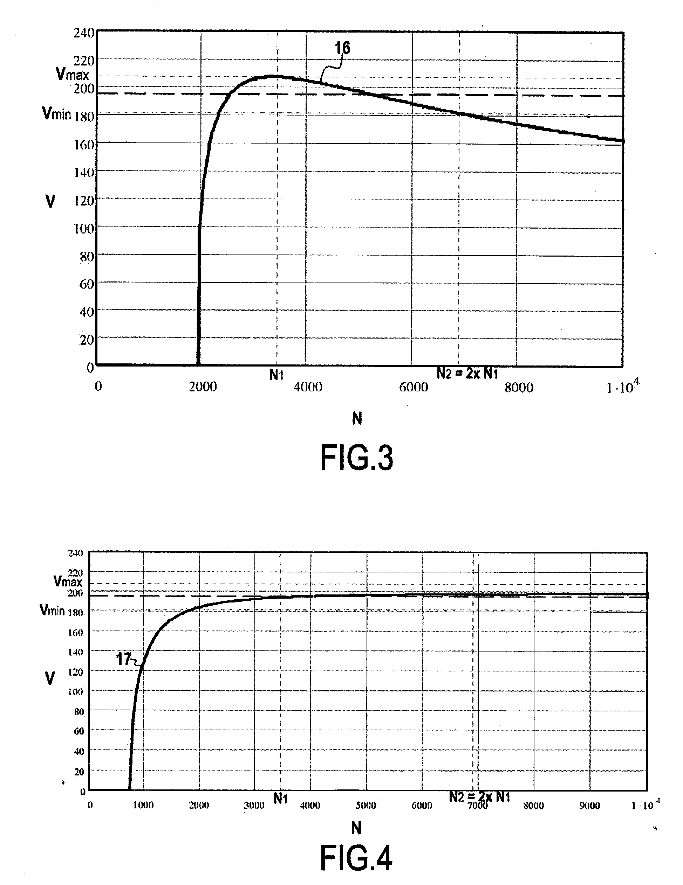

La **figure 3** représente un graphe qui montre que le fonctionnement comme générateur asynchrone auto-excité est possible, même lorsque la vitesse de rotation N varie dans un rapport 1 à 2. En effet, l'équipement électrique 7 étant principalement résistif, il peut être conçu pour tolérer des variations de tension de quelques pourcents sans grande pénalité.

La machine asynchrone 5 peut être caractérisée, notamment, par son inductance de magnétisation $L_m$, qui peut être exprimée par une loi de saturation selon l'équation suivante :

$$L_m = L_0 \frac{I_{\mu 2}^{\alpha}}{I_{\mu 2}^{\alpha} + I_m^{\alpha}}$$

Dans cette équation :

- $L_m$ est l'inductance de magnétisation (en Henry),
- $L_0$ est l'inductance de magnétisation à courant nul (en Henry),
- $I_{\mu 2}$ est le courant de magnétisation qui fait décroître l'inductance de magnétisation $L_m$ d'un facteur 2,

- $I_m$ est le courant de magnétisation,
- $\alpha$ est un coefficient qui dépend des caractéristiques de la machine asynchrone 5, principalement du matériau magnétique utilisé et de l'entrefer.

Pour une machine asynchrone typique, le coefficient $\alpha$ est de l'ordre de 3. La courbe 16 de la figure 3 illustre la variation de la tension V générée par la machine asynchrone 5, pour un coefficient $\alpha = 3$.

On constate que, pour une vitesse de rotation N variant dans un rapport 1 à 2, dans une plage typique du fonctionnement d'un moteur d'aéronef allant de $N_1 = 3500$ T/min à $N_2 = 7000$ T/min, la tension V varie dans une plage $[V_{min} - V_{max}]$ correspondant à une variation de tension d'environ +6.2% à - 6.2%, ce qui correspond à une variation de puissance de 25% environ entre la vitesse minimale $N_1$ et la vitesse maximale $N_2$. L'équipement électrique 7 étant principalement résistif, une telle variation peut être acceptable, dans un mode de réalisation.

La **figure 4** est un graphe similaire à celui de la figure 3, dans lequel la courbe 17 correspond à un coefficient $\alpha = 2$. On constate que la variation de tension V est nettement plus faible que dans le cas de la figure 3. Ainsi, si l'équipement électrique 7 ne peut supporter qu'une variation de tension limitée, un mode de réalisation de l'invention propose de concevoir la machine asynchrone 5 de manière à obtenir un coefficient $\alpha$ proche de ou égale à 2, par exemple par le choix du matériau magnétique utilisée et par le dimensionnement de l'entrefer. Un exemple de matériau magnétique pouvant convenir est des tôles de FeCo.

Dans le cadre de la présente description, on considère qu'un coefficient $\alpha$ est proche de 2 s'il est inférieur à 2,5, de préférence inférieur à 2,25.

Dans le mode de réalisation de la figure 2, que la machine asynchrone 5 présente un coefficient $\alpha$ proche de 2 (cas de la figure 4) ou plus élevé (cas de la figure 3), le dispositif d'excitation 8 peut comprendre de simples condensateurs 15 de valeur constante, reliés au circuit électrique 12 par des commutateurs 14. De plus, les condensateurs 15 et les commutateurs 14 doivent être dimensionnés uniquement pour le courant de magnétisation de la machine asynchrone 5, plus faible que le courant d'alimentation des résistances de dégivrage 11. Le dispositif d'excitation 8 peut donc être conçu de manière particulièrement simple et dimensionné de manière limitée, ce qui permet de limiter la taille et le coût du dispositif d'excitation 8.

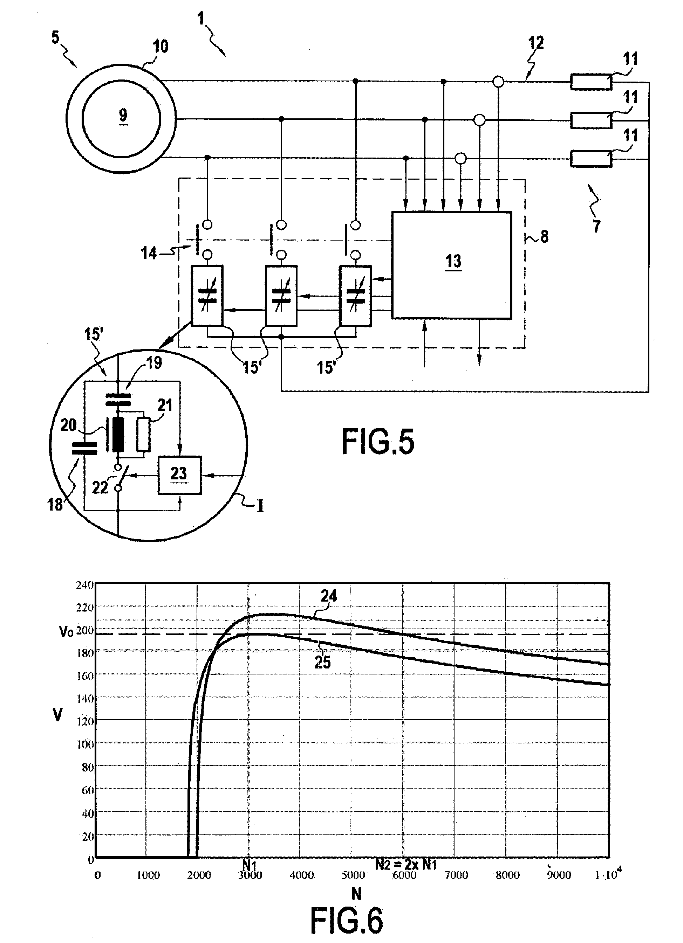

En référence aux figures 5 et 6, on décrit maintenant un mode de réalisation dans lequel les condensateurs 15 sont remplacés par des cellules 15' à capacité variable. Les autres éléments du circuit d'alimentation 1 de la figure 5 sont identiques ou similaires à ceux de la figure 2. Ils sont donc désignés par les mêmes références et ne sont plus décrits en détail.

Sur la **figure 5,** le détail I illustre un exemple de réalisation de cellule 15' à capacité variable.

Dans cet exemple, la cellule 15' est une cellule à capacité commutée qui comprend un condensateur 18 de capacité Ca, relié en parallèle à une branche incluant, en série, un condensateur 19 de capacité Cb, un circuit LR incluant une inductance 20 et une résistance 21 en parallèle, et un commutateur 22. La cellule 15' comprend également un module 23 apte à commander le commutateur 22. Le module 23 et le commutateur 22 peuvent être réalisés sous la forme de circuits électroniques.

Lorsque le commutateur 22 est ouvert de manière permanente, la cellule 15' présente une capacité C égale à Ca. Lorsque le commutateur 22 est fermé de manière permanente, la cellule 15' présente une capacité C égale à Ca + Cb. Par ailleurs, lorsque l'unité 23 commande l'ouverture et la fermeture du commutateur 22 selon un rapport cyclique D, la cellule 15' se comporte comme une capacité C égale à Ca + Cb * D.

En fonction d'une consigne de capacité reçue de l'unité électronique de commande 13 et d'une mesure de la capacité C, le module 23 commande l'ouverture, la fermeture ou la commutation ouvert/fermé selon un rapport cyclique D du commutateur 22. La fréquence de la modulation en largeur d'impulsion utilisée pour obtenir un rapport cyclique D déterminé est choisie bien supérieure à la fréquence électrique de la machine asynchrone 5.

L'inductance 20 permet de limiter l'amplitude du courant transitoire lors de la fermeture du commutateur 22, et la résistance 21 lors de l'ouverture du commutateur 22. La fréquence de résonnance du circuit LC constitué par le condensateur 19 et l'inductance 20 est choisie bien supérieure à la fréquence de la modulation en largeur d'amplitude.

La **figure 6** est un graphe similaire aux graphes des figures 3 et 4, concernant une machine asynchrone 5 de coefficient $\alpha$ = 3. Les courbes 24 et 25 représentent l'évolution de la tension V en fonction de la vitesse de rotation N, pour deux valeurs différentes de la capacité C des cellules 15'. Plus précisément, la courbe 24 correspond à une capacité Ci inférieure à la capacité $C_2$ correspondant à la courbe 25. La courbe 25 passe par le point $(N_1, V_0)$ et la courbe 24 passe par le point $(N_2, V_0)$. Les courbes de la figure 6 correspondent à un exemple dans lesquels la capacité $C_1$ est inférieure de 18% à la capacité $C_2$.

Pour toute valeur de la capacité C comprise entre $C_1$ et $C_2$, on peut tracer une courbe située entre les courbes 24 et 25. Cette courbe passe par un point $(N, V_0)$ avec N compris entre $N_1$ et $N_2$.

On constate donc que, pour toute vitesse de rotation N comprise entre $N_1$ et $N_2$, il est possible de produire une tension d'amplitude $V_0$ en commandant les cellules 15' pour obtenir une capacité C correspondante.

Ainsi, dans le circuit d'alimentation 1 de la figure 5, l'unité électronique de commande 13 détermine une consigne de capacité pour les cellules 15', notamment en fonction de la vitesse de rotation N, afin de fournir aux résistances de dégivrage 11 une tension alternative d'amplitude $V_0$ sensiblement constante. La consigne déterminée est transmise aux modules 23 des cellules 15'.

Par rapport au mode de réalisation de la figure 2, le mode de réalisation de la figure 5 permet d'alimenter un équipement électrique 7 qui nécessite une tension d'alimentation d'amplitude sensiblement constante. De plus, le commutateur 22 peut être dimensionné pour une partie seulement du courant de magnétisation, ce qui contribue à limiter la taille et le coût du dispositif d'excitation 8.

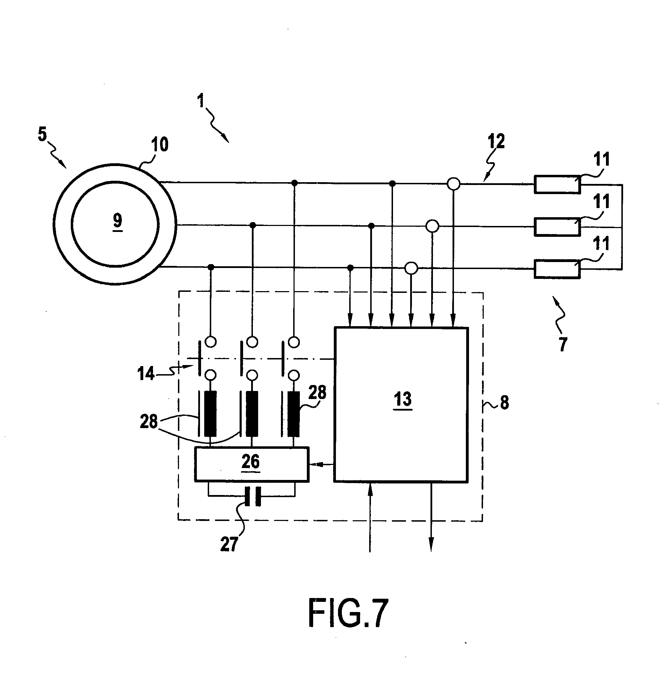

En référence à la **figure 7,** on décrit maintenant un mode de réalisation dans lequel les condensateurs 15 sont remplacés par un onduleur 26 et un condensateur 27. Les autres éléments du circuit d'alimentation 1 de la figure 7 sont identiques ou similaires à ceux de la figure 2. Ils sont donc désignés par les mêmes références et ne sont plus décrits en détail.

L'onduleur 26 est un onduleur triphasé dont les bras de pont sont raccordés au circuit électrique 12, par l'intermédiaire d'inductances de lissage 28 et des commutateurs 14. Le condensateur 27 est relié aux rails d'alimentation de l'onduleur 26 pour permettre un stockage d'énergie nécessaire à l'échange de puissance réactive.

L'onduleur 26 est commandé par l'unité électronique de commande 13, notamment en fonction de la vitesse de rotation N, afin de fournir un courant de magnétisation correspondant à la génération d'une tension alternative d'amplitude $V_0$ sensiblement constante, lorsque la vitesse de rotation N varie dans une plage déterminée.

Par rapport au mode de réalisation de la figure 2, le mode de réalisation de la figure 7 permet d'alimenter un équipement électrique 7 qui nécessite une tension d'alimentation d'amplitude sensiblement constante. De plus, l'onduleur 26 peut être dimensionné simplement pour le courant de magnétisation de la machine asynchrone 5, plus faible que le courant d'alimentation des résistances de dégivrage 11, ce qui contribue à limiter la taille et le coût du dispositif d'excitation 8.

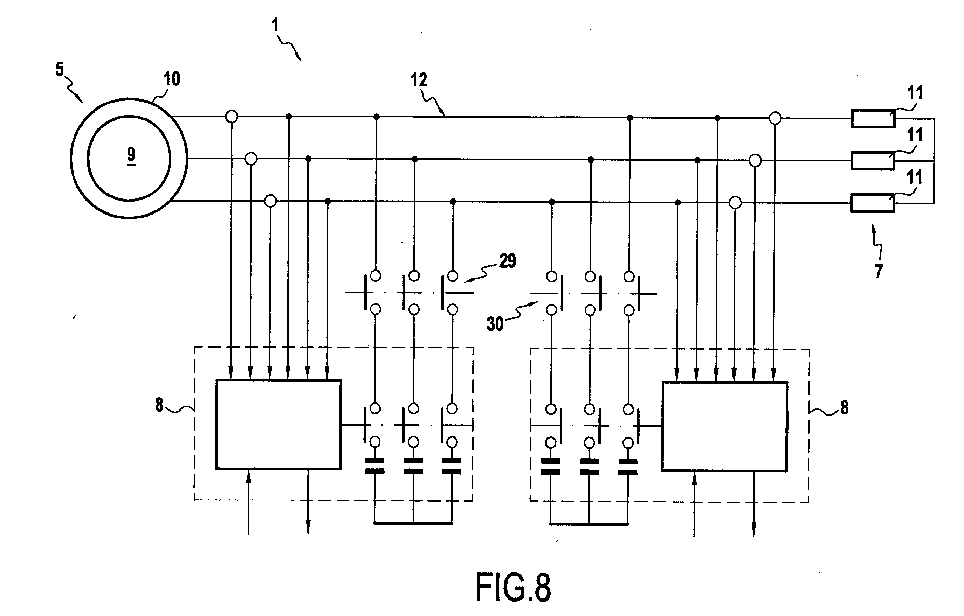

La **figure 8** représente un mode de réalisation dans lequel le dispositif d'excitation 8 est redondé. Sur la figure 8, les dispositifs d'excitation 8 représentés sont des dispositifs à capacité constante, comme dans le mode de réalisation de la figure 2. En variante, il peut s'agir de dispositif à capacité variable comme dans le mode de réalisation de la figure 5, ou à onduleur comme dans le mode de réalisation de la figure 7.

Dans le mode de réalisation représenté, des commutateurs 29 et 30 permettent de relier l'un ou l'autre des dispositifs d'excitation 8, en fonction d'un signal de voie active généré par un dispositif de protection (non représenté) qui peut être par exemple le calculateur principal du moteur 2. Lorsqu'une défaillance est détectée sur le dispositif d'excitation 8 actif, il est donc possible de basculer sur l'autre dispositif d'excitation 8, ce qui permet une meilleure fiabilité du circuit d'alimentation 1.

Dans une variante non représentée, les dispositifs d'excitation 8 sont reliés directement au circuit électrique 12, c'est-à-dire sans les commutateurs 29 et 30. Dans ce cas, les commutateurs 14 internes du dispositif d'excitation 8 non actif sont maintenus ouverts.

Comme expliqué précédemment, les dispositifs d'excitation 8 des figures 2, 5 et 7 peuvent être dimensionnés pour le courant de magnétisation (courant d'excitation) de la machine asynchrone 5, plus faible que le courant d'alimentation de l'équipement électrique 7. Ainsi, la redondance proposée à la figure 8 n'implique pas un encombrement ni un coût importants.

L'invention permet donc d'utiliser une machine asynchrone pour alimenter par exemple les résistances de dégivrage d'un moteur d'aéronef, ce qui présente plusieurs avantages. Notamment, une machine asynchrone est une machine robuste, fiable et peu coûteuse. De plus, lors de la conception d'une machine asynchrone, on dispose d'un grand degré de liberté sur le facteur de forme, ce qui facilite son intégration dans le moteur d'un aéronef.

En outre, la surveillance du circuit d'alimentation 1 peut être facilement mise en oeuvre par l'unité électronique de commande 13. En effet, si l'unité électronique de commande 13 estime, en fonction des courants mesurés dans le circuit électrique 12, que les courants dans les résistances de dégivrage 11 sont trop importants, par exemple en raison d'un défaut du type court circuit, elle peut commander l'ouverture des commutateurs 14, ce qui conduit à une désexcitation de la machine asynchrone 5.

De plus, même si l'unité électronique de commande 13 ne détecte pas un défaut ou ne commande pas l'ouverture des commutateurs 14, les résistances de dégivrage 11 peuvent être protégées contre les surintensités de courant, si par conception le maximum de puissance que peut délivrer le circuit d'alimentation 1 coïncide (ou n'est pas supérieur) avec le maximum de puissance toléré par les résistances de dégivrage 11. En effet, un défaut de type court-circuit, même partiel, fait varier la valeur des résistances de dégivrage 11. Dans ce cas, le courant magnétisant fourni par le dispositif d'excitation 8 n'est plus adapté au fonctionnement en générateur asynchrone auto-excité et un phénomène de désamorçage se produit, conduisant à l'arrêt de la génération de puissance électrique.

## Revendications

1. Circuit d'alimentation (1) en énergie électrique pour un aéronef, comprenant un générateur d'alimentation destiné à être entraîné en rotation par le moteur (2) de l'aéronef pour alimenter un équipement électrique (7) du moteur de l'aéronef, **caractérisé en ce que** le générateur d'alimentation comprend une machine asynchrone (5) reliée à un dispositif d'excitation (8),

   la machine asynchrone (5) incluant un rotor (9) apte à être entrainé en rotation par le moteur (2) et un stator (10) relié audit équipement électrique (7),

le dispositif d'excitation (8) étant apte à faire circuler un courant réactif dans ledit stator (10),

dans lequel ledit dispositif d'excitation (8) comprend un ou plusieurs condensateurs (15),

la machine asynchrone (5) présentant une inductance de magnétisation Lm pouvant être exprimée par une loi :

$$L_m = L_0 \frac{I_{\mu 2}^{\alpha}}{I_{\mu 2}^{\alpha} + I_m^{\alpha}}$$

où $L_0$ est l'inductance de magnétisation à courant nul, $I_{\mu 2}$ est le courant de magnétisation qui fait décroitre l'inductance de magnétisation $L_m$ d'un facteur 2, $I_m$ est le courant de magnétisation, et $\alpha$ est un coefficient qui dépend des caractéristiques de la machine asynchrone, dans lequel $\alpha$ est un inférieur à 2,5.

2. Circuit d'alimentation selon la revendication 1, comprenant un deuxième dispositif d'excitation (8) relié à la machine asynchrone (5).

3. Moteur (2) d'aéronef comprenant un circuit d'alimentation (1) selon l'une des revendications 1 et 2.

## Patentansprüche

1. Schaltung zur Versorgung (1) mit elektrischer Energie für ein Flugzeug, umfassend einen Versorgungsgenerator, der dazu bestimmt ist, durch das Triebwerk (2) des Flugzeugs drehangetrieben zu werden, um eine elektrische Einrichtung (7) des Triebwerks des Flugzeugs zu versorgen, **dadurch gekennzeichnet, dass** der Versorgungsgenerator eine Asynchronmaschine (5), die mit einer Erregungsvorrichtung (8) verbunden ist, umfasst, wobei die Asynchronmaschine (5) einen Rotor (9), der geeignet ist, durch das Triebwerk (2) drehangetrieben zu werden, und einen mit der elektrischen Einrichtung (7) verbundenen Stator (10) einschließt, wobei die Erregungsvorrichtung (8) geeignet ist, in dem Stator (10) einen Blindstrom fließen zu lassen, wobei die Erregungsvorrichtung (8) einen oder mehrere Kondensatoren (15) umfasst, wobei die Asynchronmaschine (5) eine Magnetisierungsinduktivität Lm aufweist, die durch ein Gesetz ausgedrückt werden kann:

$$L_m = L_0 \frac{I_{\mu 2}^{\alpha}}{I_{\mu 2}^{\alpha} + I_m^{\alpha}}$$

worin $L_0$ die Magnetisierungsinduktivität bei Nullstrom ist, $I_{\mu 2}$ der Magnetisierungsstrom ist, der die Magnetisierungsinduktivität $L_m$ um einen Faktor 2 abnehmen lässt, $I_m$ der Magnetisierungsstrom ist und $\alpha$ ein Koeffizient ist, der von den Eigenschaften der Asynchronmaschine abhängt, wobei $\alpha$ einer kleiner als 2,5 ist.

2. Versorgungsschaltung nach Anspruch 1, umfassend eine mit der Asynchronmaschine (5) verbundene zweite Erregungsvorrichtung (8).

3. Triebwerk (2) eines Flugzeugs, umfassend eine Versorgungsschaltung (1) nach einem der Ansprüche 1 und 2.

**Claims**

1. A power supply circuit (1) for supplying electrical energy in an aircraft, the circuit comprising a power supply generator for being driven in rotation by the engine (2) of the aircraft in order to power electrical equipment (7) of the aircraft engine, the circuit being **characterized in that** the power supply generator comprises an asynchronous machine (5) connected to an excitation device (8);
the asynchronous machine (5) including a rotor (9) suitable for being driven in rotation by the engine (2) and a stator (10) connected to said electrical equipment (7); and
the excitation device (8) being suitable for causing a reactive current of flow in said stator (10);
wherein said excitation device (8) comprises one or more capacitors (15); and
the asynchronous machine (5) presents magnetization inductance $L_m$ that may be expressed by the following relationship:

$$L_m = L_0 \frac{I_{\mu 2}{}^{\alpha}}{I_{\mu 2}{}^{\alpha} + I_m{}^{\alpha}}$$

where $L_0$ is the magnetization induction at zero current, $I_{\mu 2}$ is the magnetization current that decreases the magnetization inductance $L_m$ by a factor of 2, $L_m$ is the magnetization current, and $\alpha$ is a coefficient that depends on the characteristics of the asynchronous machine, where $\alpha$ is less than 2.5.

2. A power supply circuit according to claim 1, comprising a second excitation device (8) connected to the asynchronous machine (5).

3. An aeroengine (2) comprising a power supply circuit (1) according to claim 1 or claim 2.

FIG.1

FIG.2

FIG.3

FIG.4

FIG.5

FIG.6

FIG.7

FIG.8

**EP 2 638 632 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2911848
- US 5194757 A
- FR 2870401